# EUROPEAN PATENT SPECIFICATION

(11) **EP 0 382 473 B1**
(45) Date of publication and mention of the grant of the patent: **24.05.1995**
(21) Application number: 90301226.8
(22) Date of filing: 06.02.1990
(51) Int. Cl.: A23P 1/08, A23L 1/164, A23L 1/18, A23L 1/312

(54) **Coated expanded snack product**
Beschichtetes expandiertes Imbissprodukt
Produit de snack expansé enrobé

(30) Priority: 08.02.1989 US 308146
(43) Date of publication of application: 16.08.1990
(73) Proprietor: GRIFFITH LABORATORIES U.S.A., INC., Alsip, Illinois 60658-3495 (US)
(72) Inventor: Bernacchi, Donald B., Chicago, Illinois 60635 (US); Immel, Donna L., Green Oaks, llinois 60048 (US); Yuknis, Carol A., Highland, Indiana 46322 (US)
(74) Representative: Jones, Michael Raymond

(56) References cited:
- EP-A- 0 020 849
- EP-A- 0 286 098
- DE-A- 3 231 580
- US-A- 3 540 890
- US-A- 3 745 019
- US-A- 4 623 546
- PATENT ABSTRACTS OF JAPAN, vol. 12, no. 306 (C-522), 19 August 1988; & JP-A-63 079 564

## Description

This invention relates generally to snack products and their production.

Since their inception, snack foods have been evolving into ever changing products. From the simplest of snacks like potato chips and popcorn, through the more complicated extruded snack products, current snack foods can be categorized into three generations of development.

### First Generation Snacks

The first generation snacks, which are the most traditional of snack items, are made from a single whole ingredient. First generation snacks are usually produced by a means other than extrusion. Typical of these snacks are potato chips, popcorn and nuts.

### Second Generation Snacks

Technological developments have resulted in the creation of second generation snacks. These differ from first generation snacks in that they are made from one or more base ingredients not in their whole form. Second generation snack foods may be expanded or unexpanded. In some cases, a frying and/or a baking step is used to give the product its final textural qualities. Classic examples of second generation snacks include corn curls (expanded), tortilla chips (unexpanded) and corn chips (unexpanded).

Extrusion equipment can be used to produce a second generation snack in the form of an expanded farinaceous material. In the extrusion process, the products are expanded, shaped and sized at the extrusion die. No further expansion is required.

Seasoning of second generation snacks can be achieved through topical dry or oil slurry application.

### Third Generation Snacks

Combining cereal products and starches into mixtures which are subjected to successive processing stages gives rise to third generation snacks. Typical of this category are pellets or half-products which require two steps to define the shape of the finished product. The extrusion process differs from that used in producing a second generation snack in that a primary extruder gelatinizes the ingredients creating certain restrictions on the dough mass. A secondary extruder can be used to densify, shape and cool the dough through a final die.

This dense material, which contains from 20-30% moisture by weight, is then processed through a dryer at a selected time and temperature to achieve a final 10-12% moisture level. The resulting pellets can be packaged with ultimate expansion to be carried out by a processor or they can be stored in a climate controlled area for 24 hours, further expanded by hot air or hot oil, and seasoned.

US-A-3540890 discloses a snack product made by extruding cooked dough, drying the extruded product, dipping the dried extruded product in a liquid batter, applying a breading, and then deep-fat frying.

Third generation snacks combine shapes and ingredients to yield the widest variety of currently available snack foods.

### Fourth Generation Snacks

In the unique fourth generation snack of this invention, a second or third generation item is coated and further processed to achieve a new product with unique texture, taste and appearance.

According to one aspect of the present invention, there is provided a method of making a coated expanded snack product, comprising:
battering in a liquid precoat mixture an expanded edible base material which contains up to 20% by weight moisture and which is capable of maintaining its integrity on immersion in the liquid precoat mixture;
applying a breading to the battered base material;
baking the battered and breaded base material; and
frying the battered, breaded and baked base material.

According to another aspect of the present invention, there is provided a coated expanded snack product comprising an expanded edible base material containing up to 20% by weight moisture and capable of maintaining its integrity on immersion in a liquid precoat mixture, which base material has been sequentially battered with the liquid precoat mixture, breaded, baked and fried.

The present invention can thus provide a new expanded snack product with unique texture, flavour and appearance characteristics, and which can have a reduced oil content.

The present invention provides a new generation of snack food which represents an important improvement beyond the second and third generation snack foods.

The base materials useful in the practice of the invention include any expanded edible base material initially containing up to 20% by weight moisture which maintains its integrity on immersion in the liquid precoat mixture used in the method of the invention. In a preferred embodiment, the initial moisture level will be less than 10% by weight and in a more preferred embodiment, it initially will be less than about 5% by weight.

One group of particularly useful base materials includes any expanded farinaceous second or third generation snack products which maintain their integrity on immersion in the liquid precoat mixture used in the method of the invention. Preferred second generation products include expanded corn, rice, potato, oat and wheat, or combinations of two or more thereof, with corn, rice, potato, oat and wheat, or combinations of two or more thereof, with corn, rice, potato and wheat being preferred. Preferred third generation products include pellets and half-products that are further expanded corn, rice, potato, oat and wheat, or combinations of two or more thereof, with corn, rice, potato and wheat being preferred. Among the noted expanded second and third generation farinaceous materials, expanded corn is most preferred, because of its wide availability and its economics relative to other farinaceous materials.

Another particularly useful base material is pork skins, which is a third generation snack food composed primarily of protein. This product is not extruded; it exists initially as a shelf stable half product (pork rind pellet) produced by rendering fresh or frozen pieces of pork skin. Rendering expels the moisture from the pork skin, making this a base material with no more than 20% by weight moisture. The resulting pork rind pellets arc then popped by frying in either pork fat or vegetable oil to produce an expanded pork skin which may be used as a base in the practice of this invention.

It is most important in the practice of the invention to control the moisture in each stage of processing. During frying, oil is exchanged with water, and therefore excess water leads to an undesirably oily product. Residual moisture also tends to yield a tougher and more chewy product. Accordingly, as already noted, the moisture content of the base should not exceed about 20% by weight, preferably should not exceed about 10% by weight and most preferred should not exceed about 5% by weight.

The liquid precoat mixture comprises a dry batter and water mixture. In order to control moisture in the product (which ultimately controls oil content and texture, as discussed earlier) it was found that the hydration ratio of the precoat mixture should not exceed 3:1 by weight water to dry mix. In terms of a Zahn cup measure at 8.9°C (matches applicable ASTM formula in D4212), the broadest useful viscosity range is about 10-22 seconds, a preferred range is 12-20 seconds, and the most preferred range is 16-18 seconds.

The dry ingredients of the batter may be any flour and/or starch. In a preferred embodiment, soft wheat flours are used. Preferred flours and starches include yellow corn flour, soft wheat flour, modified corn starch and combinations thereof. Optional additional dry ingredients include leavening, coloring and flavoring agents and hydrocolloids.

One dry batter mix which has been found to be particularly useful in the practice of the invention contains:
Sodium bicarbonate
Sodium aluminum phosphate
Modified corn starch
Yellow corn flour
Soft wheat flour
Coloring and flavoring agents
The breading used in the invention is fine, medium or coarse, colored or uncolored, and J, homestyle or corn flake type. The abbreviation 'J' is a commonly accepted term used to refer to "Japanese" style breadcrumbs. Most preferred among these breadings is the fine J crumb which exhibits outstanding appearance and textural qualities over the broadest range of base materials. Combinations of these crumbs as well as other crumb types may be used. It has been found, however, that if the crumbs are too fine they tend to fully seal the surface of the base, preventing optimal release of moisture, whereas if the crumbs are too large they leave much of the battered surface exposed to the hot fat upon frying, producing an undesirably oily finished product.

Although minimizing moisture content in the base material and controlling solids in the batter reduces oil content in the finished product, it was found that the desired reductions in oil content to 35 percent by weight or less could be achieved only by also introducing a baking step immediately after battering and breading the base material, and prior to frying it. This reduces oil pick-up by reducing moisture so that, in subsequent frying less moisture is available to exchange with the frying oil, as discussed earlier.

Optimum baking times will vary depending on the base material and the baking apparatus. For example, in a forced air oven, baking times and temperatures will range from about 7 minutes at about 120°C to about 2 minutes at about 205°C.

The frying time and temperature are chosen to produce the desired color development and process economy. This may be achieved ny frying the battered, breaded, and baked product at a temperature of from about 175°C to about 205°C for about 5 to 30 seconds. In a preferred embodiment, the product is fried at about 196°C for about 15 seconds.

Finally, the snack product of the present invention may be flavored and colored by adding the desired flavorings, seasonings, and colorings to the batter, to the bread crumbs or to the final product, after completion of the frying step. When the flavorings, seasonings, and colorings are added to the batter, care must be taken to stay within the useful viscosity range, as discussed above.

The following examples are intended to illustrate the practice of the present invention.

### Example 1

An expanded snack product in accordance with the present invention was prepared and tested as described below.

### Precoat

The precoat was prepared from a dry batter mix comprising the following:

| | |
|---|---|
| Sodium bicarbonate (granular) | .60% |
| Sodium aluminum phosphate | .60% |
| Modified corn starch | 7.35% |
| Yellow corn flour | 45.50% |
| Soft wheat flour | 40.30% |
| Coloring agents | 3.35% |
| Fine flake salt | 2.30% |
| TOTAL | 1̅0̅0̅.̅0̅0̅%̅ |

Sufficient water was added to bring the viscosity of the mix to No. 2 Zahn cup equals 16 seconds at 8.9°C. The dwell time of the base in the precoat was approximately 5 seconds.

### Bread Crumbs

Fine Japanese style crumbs as described in the present assignee's U.S. Patent No. 4,423,078 were loaded into a crumb breader machine in preparation for running the experiment.

### Baking and Frying Steps

The baking and frying steps were carried out in tandem. A good product rate was achieved setting the oven temperature at 204°C, the forced air oven fan speed at 4950 FPM and the oven dwell time of the product at about 2 minutes. The frying step was carried out at about 193-196°C for a dwell time of 15 seconds, which maximized the fry oil stability, while achieving the desired golden brown color. The frying oil used was a blend of partially hydrogenated soybean and cottonseed oils, with a melting point of approximately 40°C.

Test trials were undertaken using second generation extruded, expanded corn balls with a moisture content of less than 2% by weight and an average diameter of 2 centimeters. In one trial the corn balls were coated and then fried at 196°C for 15 seconds. They were subsequently run through a forced air oven at 260°C for 2 minutes, fan speed 4950 FPM. The product was black after baking because the oven actually fried the coated corn balls further due to the pickup of fat in the previous frying step.

In a more successful trial the corn balls were coated and run through the oven at 204°C for 2 minutes, fan speed 4950 FPM. The resulting product was somewhat browned upon exiting the oven. Frying at 196°C for 15 seconds evened out the color nicely. This product was excellent in texture, appearance and taste and had a oil content of less than 35 percent by weight. In addition, the following typical snack seasonings could be applied to the latter products: cheddar, sour cream & cheddar, and BBQ. In all cases, the resulting product would be superior to the originating generation snack products, in flavor, appearance and taste and oil content.

### Example 2

Another expanded snack product in accordance with the present invention was prepared using an extruded, expanded corn curl, coated with the same batter and bread crumbs as described above in Example 1. The oil used in this Example was 100% coconut oil, having a melting point of 22-26°C. Dwell time of the base in the precoat was approximately 5 seconds, also as in Example 1.

A forced air oven temperature of 120°C was used, with a dwell time of about 7 minutes. The frying step was carried out at about 193 to 196°C, for a dwell time of about 20 seconds. The resulting product was excellent in texture, appearance and taste.

### Example 3

Another expanded snack product in accordance with the present invention was prepared using expanded pork skins containing about 2% by weight moisture. The procedures and parameters of Example 2 were followed to produce an end product which included substantial snack product that was excellent in texture, appearance and taste. If oven fan speed, oven dwell time and/or oven temperature were increased, the yield of excellent snack product would be improved.

### Example 4

It the experiment of Example 2 were carried out using the materials and parameters of Example 2, but deleting the baking step, it would be found that the resulting product would contain at least about 40% by weight oil, which is considered to be undesirable and would be unacceptable to most consumers. An oil content of less than 35% by weight would be acceptable to most consumers.

While the present invention is described above in connection with preferred or illustrative embodiments, these embodiments are not intended to be exhaustive or limiting of the invention. Rather, the invention is intended to cover all alternatives, modifications, and equivalents included within its scope, as defined by the appended claims.

## Claims

1. A method of making a coated expanded snack product, comprising:
battering in a liquid precoat mixture an expanded edible base material which contains up to 20% by weight moisture and which is capable of maintaining its integrity on immersion in the liquid precoat mixture;
applying a breading to the battered base material;
baking the battered and breaded base material; and
frying the battered, breaded and baked base material.

2. A method according to claim 1, wherein the edible base material is expanded pork skins or is an expanded farinaceous material.

3. A method according to claim 2, in which the expanded farinaceous material is chosen from expanded corn, rice, potato, oat, wheat or combinations of two or more thereof, and pellets and half products that are further expanded of corn, rice, potato, oat, wheat and combinations of two or more thereof, preferably expanded corn, or pellets or half products of corn.

4. A method according to claim 1, 2 or 3, wherein the expanded edible base material has a moisture content of up to 10% by weight, preferably up to 5% by weight.

5. A method according to any preceding claim, wherein the liquid precoat mixture comprises a mixture of water and a dry batter ingredient, the dry batter ingredient comprising one of (i) flour, preferably soft wheat flour, and (ii) a mixture of flour and starch, preferably a mixture of yellow corn flour, soft wheat flour and modified corn starch, and more preferably a mixture of the following composition by weight:
| | |
|---|---|
| Sodium bicarbonate | 0.60% |
| Sodium aluminium phosphate | 0.60% |
| Modified corn starch | 7.35% |
| Yellow corn flour | 45.50% |
| Soft wheat flour | 40.30% |
| Colouring agents | 3.35% |
| Fine flake salt | 2.30%. |

6. A method according to any preceding claim, wherein, with the liquid precoat mixture comprising a mixture of water and dry batter ingredients, the dry ingredients are present such that there is a weight ratio of up to 3:1 for the ratio of the water to the dry ingredients.

7. A method according to any preceding claim, wherein the liquid precoat mixture has a viscosity yielding a No. 2 Zahn cup measure of 10-22 seconds at 8.9°C, preferably a No. 2 Zahn cup measure of 12-20 seconds at 8.9°C, more preferably a No. 2 Zahn cup measure of 16-18 seconds at 8.9°C.

8. A method according to any preceding claim, wherein the breading is chosen from J, homestyle, and cornflake type breading, preferably fine J crumb breading.

9. A method according to any preceding claim, wherein one or more than one of flavourings, seasonings and colourings is added to the liquid precoat mixture, and/or to the breading, and/or to the final product, after completion of the frying step.

10. A method according to any preceding claim, wherein the battered and breaded base material is baked in a forced air oven for from approximately 7 minutes at approximately 120°C to approximately 2 minutes at approximately 205°C.

11. A method according to any preceding claim, wherein the battered, breaded and baked base material is fried at a temperature of from 175°C to 205°C for from 30 to 5 seconds, preferably at approximately 196°C for approximately 15 seconds.

12. A coated expanded snack product comprising an expanded edible base material containing up to 20% by weight moisture and capable of maintaining its integrity on immersion in a liquid precoat mixture, which base material has been sequentially battered with the liquid precoat mixture, breaded, baked and fried.

## Patentansprüche

1. Verfahren zur Herstellung eines mit Überzug versehenen, volumenvergrößerten Snack-Erzeugnisses, umfassend
das Schlagen, in einer flüssigen Vorbeschichtungsmischung, eines volumenvergrößerten genießbaren Grundmaterials, das bis zu 20 Gew.-% Feuchtigkeit enthält und das befähigt ist, seine Unversehrtheit beim Eintauchen in die flüssige Vorbeschichtungsmischung zu behalten,
das Aufbringen einer Panade auf das geschlagene Grundmaterial,
das Backen des geschlagenen und panierten Grundmaterials; und
das Braten des geschlagenen, panierten und gebackenen Grundmaterials.

2. Verfahren nach Anspruch 1, worin das genießbare Grundmaterial volumenvergrößerte Schweineschwarte oder ein volumenvergrößertes stärkehaltiges Material ist.

3. Verfahren nach Anspruch 2, worin das volumenvergrößerte stärkehaltige Material aus volumenvergrößertem Mais, Reis, Kartoffeln, Hafer, Weizen oder Kombinationen aus zwei oder mehr dieser Materialien und Pellets oder Halbfertigerzeugnissen aus Mais, Reis, Kartoffeln, Hafer, Weizen oder Kombinationen aus zwei oder mehr dieser Materialien, die weiter volumenvergrößert sind, vorzugsweise volumenvergrößertem Mais oder Pellets oder Halbfertigerzeugnissen aus Mais, ausgewählt ist.

4. Verfahren nach den Ansprüchen 1, 2 oder 3, worin das volumenvergrößerte genießbare Grundmaterial einen Feuchtigkeitsgehalt bis zu 10 Gew.-%, vorzugsweise bis zu 5 Gew.-%, besitzt.

5. Verfahren nach irgendeinem vorhergehenden Anspruch, worin die flüssige Vorbeschichtungsmischung eine Mischung aus Wasser und einem trockenen Teig-Bestandteil umfaßt, wobei der trockene Teig-Bestandteil einen Bestandteil aus
(i) Mehl, vorzugsweise Weichweizenmehl, und
(ii) einer Mischung aus Mehl und Stärke, vorzugsweise einer Mischung aus gelbem Maismehl, Weichweizenmehl und modifizierter Maisstärke und, mehr bevorzugt, eine Mischung aus
| | |
|---|---|
| Natriumbicarbonat | 0,60 % , |
| Natriumaluminiumphosphat | 0,60 % , |
| modifizierter Maisstärke | 7,35 % , |
| gelbem Maismehl | 45,50 % , |
| Weichweizenmehl | 40,30 % , |
| Farbgebenden Mitteln | 3,35 % , |
| feinflockigem Salz | 2,30 % |
umfaßt.

6. Verfahren nach irgendeinem vorhergehenden Anspruch, worin bei der eine Mischung aus Wasser und trockenen Teig-Bestandteile umfassenden flüssigen Vorbeschichtungsmischung, die Trockenbestandteile so vorhanden sind, daß das Gewichts-Verhältnis von Wasser zu den Trockenbestandteilen bis zu 3 : 1 beträgt.

7. Verfahren nach irgendeinem vorhergehenden Anspruch, worin die flüssige Vorbeschichtungsmischung eine solche Viskosität besitzt, daß die Messung mit dem Zahn-Becher No. 2 ein Maß von 10-22 s bei 8,9 °C, vorzugsweise mit dem Zahn-Becher No. 2 ein Maß von 12-20 s bei 8,9 °C, mehr bevorzugt mit dem Zahn-Becher No. 2 ein Maß von 16-18 s bei 8,9 °C ergibt.

8. Verfahren nach irgendeinem vorhergehenden Anspruch, worin die Panade aus "J, Homestyle" und Panade vom Maisflocken-Typ, vorzugsweise "[Cornflake type] fine J crumb breading", ausgewählt ist.

9. Verfahren nach irgendeinem vorhergehenden Anspruch, worin ein oder mehr als ein Geschmacksstoff, Gewürz und farbgebendes Mittel zu der flüssigen Vorbeschichtungsmischung und/oder zu der Panade und/oder zu dem Endprodukt, nach der Beendigung des Schrittes des Bratens, hinzugefügt wird.

10. Verfahren nach irgendeinem vorhergehenden Anspruch, worin das geschlagene und panierte Grundmaterial in einem Umluftofen etwa 7 min bei etwa 120 °C bis etwa 2 min bei etwa 205 °C gebacken wird.

11. Verfahren nach irgendeinem vorhergehenden Anspruch, worin das geschlagene, panierte und gebackene Grundmaterial 30 bis 5 s bei einer Temperatur von 175 °C bis 205 °C, vorzugsweise etwa 15 s bei einer Temperatur von etwa 196 °C gebraten wird.

12. Mit Überzug versehenes, volumenvergrößertes Snack-Erzeugnis, umfassend ein volumenvergrößertes genießbares Grundmaterial, das bis zu 20 Gew.-% Feuchtigkeit enthält und befähigt ist, seine Unversehrtheit beim Eintauchen in eine flüssige Vorbeschichtungsmischung zu behalten, wobei das Grundmaterial, der Reihe nach, mit der flüssigen Vorbeschichtungsmischung geschlagen, paniert, gebacken und gebraten ist.

## Revendications

1. Méthode d'obtention d'un produit expansé enrobé pour la restauration rapide, comprenant :
l'enrobage dans un mélange liquide de préenrobage d'une matière de base comestible expansée contenant jusqu'à 20 % d'humidité en poids, et susceptible de garder son intégrité lors de son immersion dans le mélange liquide de préenrobage ; l'application d'une chapelure sur la matière de base enrobée ; la cuisson de la matière de base enrobée et panée ; et la friture de la matière de base enrobée, panée et cuite.

2. Méthode selon la revendication 1, caractérisée en ce que la matière de base comestible est de la couenne de porc expansée ou bien une matière farinacée expansée.

3. Méthode selon la revendication 2, caractérisée en ce que la matière farinacée expansée peut être obtenue à partir de maïs, de riz, de pomme de terre, d'avoine ou de blé expansés ou d'un mélange de deux ou plus de ceux-ci, ou bien à partir de boulettes ou semi-produits qui sont ensuite expansés et sont à base de maïs, de riz, de pomme de terre, d'avoine, de blé ou d'un mélange de deux ou plus de ceux-ci, de préférence à partir de maïs expansé, ou de boulettes ou semi-produits à base de maïs.

4. Méthode selon l'une quelconque des revendications 1, 2 ou 3, caractérisée en ce que la matière de base comestible expansée a une teneur en humidité allant jusqu'à 10 % en poids, de préférence jusqu'à 5 % en poids.

5. Méthode selon l'une quelconque des revendications précédentes, caractérisée en ce que le mélange liquide de préenrobage est constitué par un mélange d'eau et d'un ingrédient sec d'enrobage, l'ingrédient sec d'enrobage pouvant être (i) de la farine, de préférence de la farine de blé tendre, ou (ii) un mélange de farine et d'amidon, de préférence un mélange de farine de maïs jaune, de farine de blé tendre et d'amidon de maïs modifié, et plus préférablement un mélange ayant la composition pondérale suivante :
| | |
|---|---|
| bicarbonate de soude | 0,60 % |
| phosphate d'aluminium et de soude | 0,60 % |
| amidon de maïs modifié | 7,35 % |
| farine de maïs jaune | 45,50 % |
| farine de blé tendre | 40,30 % |
| agents colorants | 3,35 % |
| sel fin cristallisé | 2,30 % |

6. Méthode selon l'une quelconque des revendications précédentes, caractérisée en ce que le mélange liquide de préenrobage étant constitué par un mélange d'eau et d'ingrédients secs d'enrobage, les ingrédients secs sont présents de telle sorte que le rapport pondéral entre l'eau et les ingrédients secs atteigne 3:1.

7. Méthode selon l'une quelconque des revendications précédentes, caractérisée en ce que le mélange liquide de préenrobage a une fluidité atteignant l'indice n° 2 mesuré au gobelet Zahn en 10 à 22 secondes à 8,9 °C, de préférence l'indice n° 2 mesuré au gobelet Zahn en 12 à 20 secondes à 8,9 °C, et plus préférablement l'indice n° 2 mesuré au gobelet Zahn en 16 à 18 secondes à 8,9 °C.

8. Méthode selon l'une quelconque des revendications précédentes, caractérisée en ce que la chapelure est, au choix, de type J, de type ménage, ou de la chapelure de type flocon de maïs, de préférence de la chapelure de type J.

9. Méthode selon l'une quelconque des revendications précédentes, caractérisée en ce que un ou plusieurs agents de sapidité, d'assaisonnement ou de coloration, sont ajoutés au mélange liquide de préenrobage et/ou à la chapelure et/ou au produit final après la phase de friture.

10. Méthode selon l'une quelconque des revendications précédentes, caractérisée en ce que la matière de base enrobée et panée est cuite dans un four à circulation d'air dans des conditions comprises entre 7 minutes environ à 120 °C environ et 2 minutes environ à 205 °C environ.

11. Méthode selon l'une quelconque des revendications précédentes, caractérisée en ce que la matière de base enrobée panée et cuite est frite à une température comprise entre 175 °C et 205 °C pendant 30 à 5 secondes, de préférence à 196 °C environ pendant 15 secondes environ.

12. Produit expansé enrobé pour la restauration rapide, comprenant :
une matière de base comestible expansée contenant jusqu'à 20 % d'humidité en poids, et susceptible de garder son intégrité lors de son immersion dans un mélange liquide de préenrobage, cette matière de base ayant été successivement enrobée avec le mélange liquide de préenrobage, panée, cuite et frite.
